# EUROPÄISCHE PATENTSCHRIFT

(11) **EP 0 870 106 B1**
(45) Veröffentlichungstag und Bekanntmachung des Hinweises auf die Patenterteilung: **05.01.2000**
(21) Anmeldenummer: 97909183.2
(22) Anmeldetag: 24.09.1997
(51) Int. Cl.: F02M 25/08

(54) **TANKENTLÜFTUNGSEINRICHTUNG FÜR KRAFTFAHRZEUGE**
MOTOR VEHICLE TANK VENTILATION DEVICE
DISPOSITIF DE DEGAZAGE DE RESERVOIR POUR VEHICULES A MOTEUR

(30) Priorität: 26.10.1996 DE 19644610
(43) Veröffentlichungstag der Anmeldung: 14.10.1998
(73) Patentinhaber: ROBERT BOSCH GMBH, 70442 Stuttgart (DE)
(72) Erfinder: KRIMMER, Erwin, D-73655 Plüderhausen (DE); MIEHLE, Tilman, D-71394 Kernen (DE); SCHULZ, Wolfgang, D-74321 Bietigheim-Bissingen (DE); ZIMMERMANN, Manfred, D-74906 Bad Rappenau (DE); BLUMENSTOCK, Andreas, D-71638 Ludwigsburg (DE)
(86) Internationale Anmeldenummer: DE9702163
(87) Internationale Veröffentlichungsnummer: WO9819064

(56) Entgegenhaltungen:
- WO-A-94/27131
- WO-A-96/30641
- DE-A- 19 523 935

## Beschreibung

### Stand der Technik

Die Erfindung geht aus von einer Tankentlüftungseinrichtung für Kraftfahrzeuge mit aus einem Kraftstofftank gespeistem Verbrennungsmotor der im Oberbegriff des Anspruchs definierten Gattung.

Bei einer bekannten Tankentlüftungseinrichtung dieser Art (DE 195 23 935 A1 veröffentlicht am 02.01.97, oder WO-A-94 27131), dort Brennstoffverdunstungs-Rückhaltesystem genannt, ist die zur Erzeugung des Überdrucks im System zwecks Fehlerdiagnose dienende Luftpumpvorrichtung mit ihrem Pumpenausgang über eine flexible Druckluftleitung mit dem Lufteinlaß des Filtergehäuses verbunden. In dem Pumpengehäuse der Luftpumpvorrichtung ist ein Absperrventil integriert, das einen direkten Strömungsweg vom mit einem Luftfilter belegten Pumpeneingang des Pumpengehäuses zum Pumpenausgang steuert. Der Luftauslaß des Filtergehäuses ist über ein Regenerierventil an das Saugrohr des Verbrennungsmotors angeschlossen.

Im sog. Filter- oder Regenerierbetrieb wird bei offenem Absperrventil zur Regeneration des als Aktivkohlefilter ausgebildeten Adsorptionsfilters im Filtergehäuse durch einen im Saugrohr des Verbrennungsmotors erzeugten Unterdruck Luft angesaugt, die über das geöffnete Absperrventil im Pumpengehäuse, die Druckluftleitung und den Lufteinlaß in das Filtergehäuse einströmt, hier den Adsorptionsfilter durchströmt, dabei angelagerte Kraftstoffdämpfe mitreißt und durch das Regenerierventil dosiert in das Saugrohr eintritt. Zur Fehlerdiagnose wird das Absperrventil und das Regenerierventil geschlossen, und die Luftpumpvorrichtung erzeugt in dem System aus Tankentlüftungseinrichtung und Kraftstofftank einen erhöhten Druck. Nach abgeschlossenem Druckaufbau wird geraume Zeit gewartet, bis sich der Druck ggf, aufgrund einer Leckage in der Tankentlüftungseinrichtung wieder abgebaut hat, wobei die zum Druckabbau verstrichene Zeit ein Maß für die Größe der aufgetretenen Leckageöffnung ist.

### Vorteile der Erfindung

Die erfindungsgemäße Tankentlüftungseinrichtung mit den kennzeichnenden Merkmalen des Anspruchs 1 hat den Vorteil einer wesentlichen Reduzierung des erforderlichen Einbauraums im Kraftfahrzeug, wobei die bisher übliche Schlauchverbindung zwischen dem Pumpenausgang des Pumpengehäuses und dem Lufteinlaß des Filtergehäuses entfällt. Der Einbau der Tankentlüftungseinrichtung in das Kraftfahrzeug ist wesentlich vereinfacht, da Adsorptionsfilter und Luftpumpvorrichtung als Modul vormontiert werden können. Die dadurch bedingte Einsparung von Materialkosten und Reduzierung der Montagezeit führt zu einer deutlichen Senkung der Fertigungskosten. Durch Vorsehen eines großflächigen Adsorptionsfilters im Filtergehäuse ist die Funktion der Tankentlüftungseinrichtung während einer langen Lebensdauer gesichert. Auf ein separates Luftfilter am Pumpenausgang des Pumpengehäuses kann dann verzichtet werden, wenn dieses in das Filtergehäuse integriert wird. Dies hilft weiteren Einbauraum sparen. Die federelastische Befestigung des Pumpengehäuses am Filtergehäuse sorgt für eine akustische und mechanische Entkopplung zwischen den beiden Gehäusen.

Durch die in den weiteren Ansprüchen aufgeführten Maßnahmen sind vorteilhafte Weiterbildungen und Verbesserungen der im Anspruch 1 angegebenen Tankentlüftungseinrichtung möglich.

### Zeichnung

Die Erfindung ist anhand eines in der Zeichnung dargestellten Ausführungsbeispiels im folgenden näher beschrieben. Es zeigen:
- Fig. 1: eine schematische Schnittdarstellung einer in ein Kraftfahrzeug mit Verbrennungsmotor eingebauten Tankentlüftungseinrichtung,
- Fig. 2: eine perspektivische Ansicht eines Pumpengehäuses in der Tankentlüftungseinrichtung gemäß Fig. 1,
- Fig. 3: ausschnittweise eine Draufsicht eines Filtergehäuses in der Tankentlüftungseinrichtung gemäß Fig. 1,
- Fig. 4: ausschnittweise einen Längsschnitt gemäß Linie IV-IV in Fig. 3 des Filtergehäuses mit angebautem Pumpengehäuse.

### Beschreibung des Ausführungsbeispiels

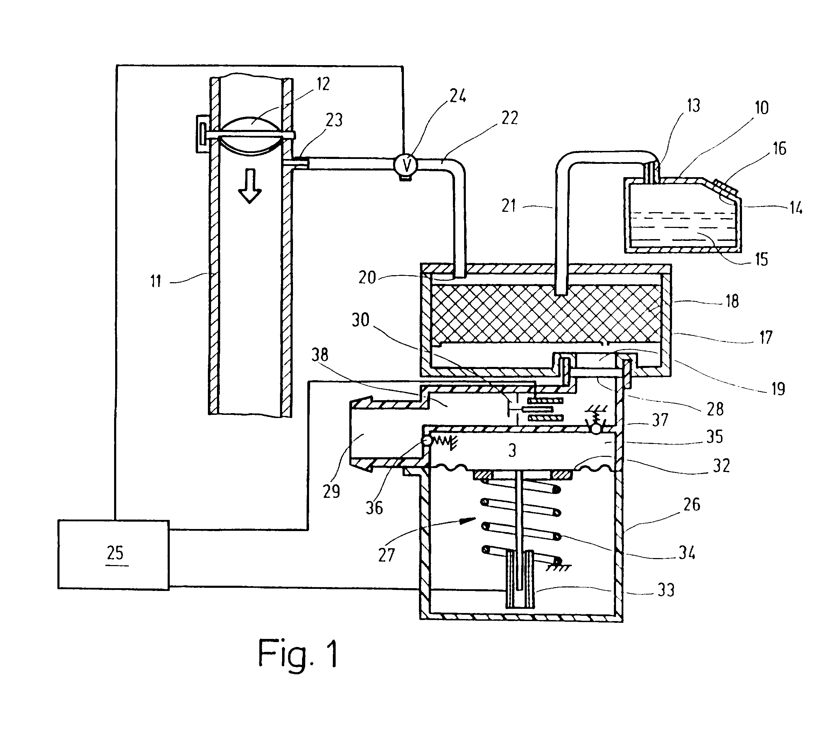

Die in Fig. 1 schematisch dargestellte Tankentlüftungseinrichtung für ein Kraftfahrzeug mit Verbrennungsmotor ist zwischen einem Kraftstofftank 10 und einem Saugrohr 11 mit Drosselklappe 12 des Verbrennungsmotors angeordnet, wobei der Anschluß an das Saugrohr 11 stromabwärts der Drosselklappe 12 und der Anschluß an den Kraftstofftank 10 an dessen Entlüftungsstutzen 13 erfolgt. Der Kraftstofftank 10 wird über einen Einfüllstutzen 14 mit Kraftstoff 15 gefüllt. Der Einfüllstutzen 14 ist mittels eines Tankdeckels 16 hermetisch und druckdicht verschließbar.

Die Tankentlüftungseinrichtung weist ein Filtergehäuse 17 auf, in dem ein bevorzugt als Aktivkohlefilter ausgebildetes Adsorptionsfilter 18 auswechselbar aufgenommen ist. Das Filtergehäuse 17 hat einen Lufteinlaß 19 und einen Luftauslaß 20 und ist über eine Anschlußleitung 21 mit dem Entlüftungsstutzen 13 des Kraftstofftanks 10 verbunden. Der Luftauslaß 20 ist über eine Verbindungsleitung 22 mit einem Anschlußstutzen 23 am Saugrohr 11 verbunden. In der Verbindungsleitung 22 ist ein Dosier- oder Regenerierventil 24 angeordnet, das von einer Steuereinrichtung 25 in Abhängigkeit von Betriebsparametern des Verbrennungsmotors gesteuert wird.

An dem Lufteinlaß 19 des Filtergehäuses 17 ist ein Pumpengehäuse 26 einer Luftpumpvorrichtung 27 mit seinem Pumpenausgang 28 angeschlossen. Der Pumpeneingang des Pumpengehäuses 26 ist mit 29 bezeichet. Wie aus der Schnittdarstellung in Fig. 1 hervorgeht, ist im Pumpengehäuse 26 noch ein Absperrventil 30 untergebracht. Die Luftpumpvorrichtung 27 umfaßt eine Pumpmenbran 32, die von einem Elektromagneten 33 und einer Rückstellfeder 34 zur Hubbewegung angetrieben wird. Der Elektromagnet 33 wird von der Steuereinrichtung 25 gesteuert. Die Pumpmembran 32 begrenzt einen Förder- oder Pumpraum 35, der über ein Einlaßventil 36 mit dem Pumpeneingang 29 und über ein Auslaßventil 37 mit dem Pumpenausgang 28 in Verbindung steht. Parallel zum Pumpraum 35 ist ein Bypass 38 vorgesehen, der sich zwischen dem Pumpeneingang 29 und dem Pumpenausgang 28 erstreckt. Im Bypass 38 ist ein als Elektromagnetventil ausgebildetes Absperrventil 30 angeordnet, das von der Steuereinrichtung 25 so gesteuert wird, daß im Regenerierbetrieb bei inaktiver Luftpumpvorrichtung 27 das Absperrventil 30 geöffnet ist und für die Fehlerdiagnose geschlossen wird.

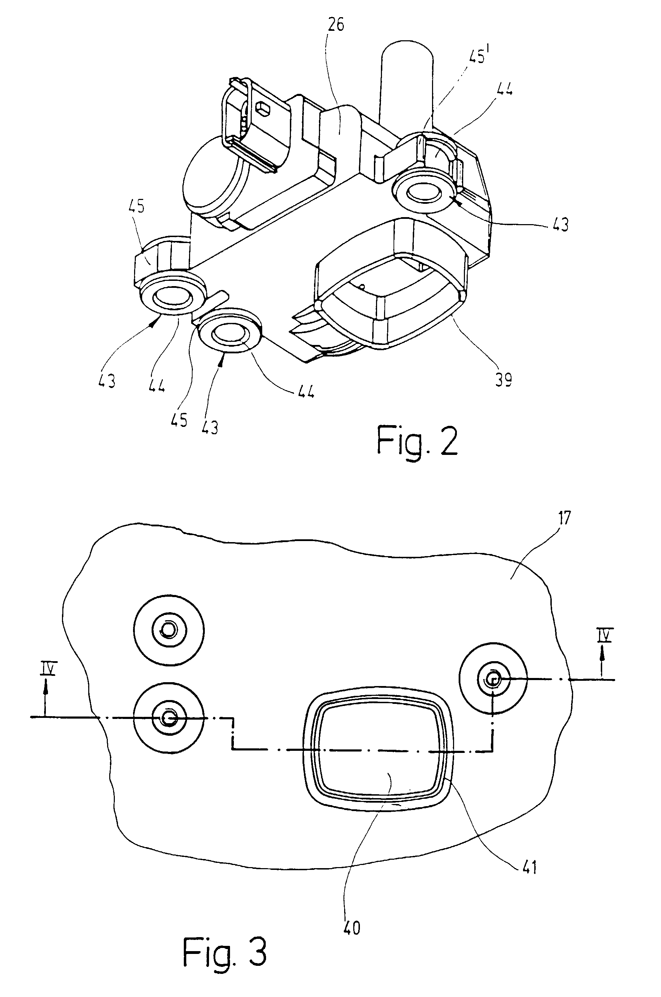

Zur Erzielung einer kompakten Bauweise der Tankentlüftungseinrichtung, die nur wenig Einbauraum im Kraftfahrzeug benötigt, ist das Pumpengehäuse mit zum Lufteinlaß 19 des Filtergehäuses 17 koaxial ausgerichtetem Pumpenausgang 28 an das Filtergehäuse 17 angesetzt und an dem Filtergehäuse 17 befestigt, wobei der Übergang zwischen Pumpenausgang 28 und Lufteinlaß 19 luftdicht abgedichtet ist. Wie aus den konstruktiven Darstellungen in Fig. 2 - 4 hervorgeht, ist hierzu am Pumpengehäuse 26 ein den Pumpenausgang 28 umschließender Auslaßstutzen 39 ausgebildet, der rechtwinklig vom Pumpengehäuse 26 absteht, und im Filtergehäuse 17 eine den Lufteinlaß 19 bildende Gehäuseöffnung 40 ausgespart. Die Gehäuseöffnung 40 ist von einer Ringnut 41 umschlossen. Auslaßstutzen 39 und Gehäuseöffnung 40 sind zueinander koaxial und kongruent ausgebildet. Zur luftdichten Abdichtung von Pumpenausgang 28 und Lufteinlaß 19 ist auf den Auslaßstutzen 39 eine elastische Dichtungshülse 42 aufgeschoben, wie mit ihrem vom Auslaßstutzen 39 abgekehrten Stirnende in der Ringnut 41 einliegt.

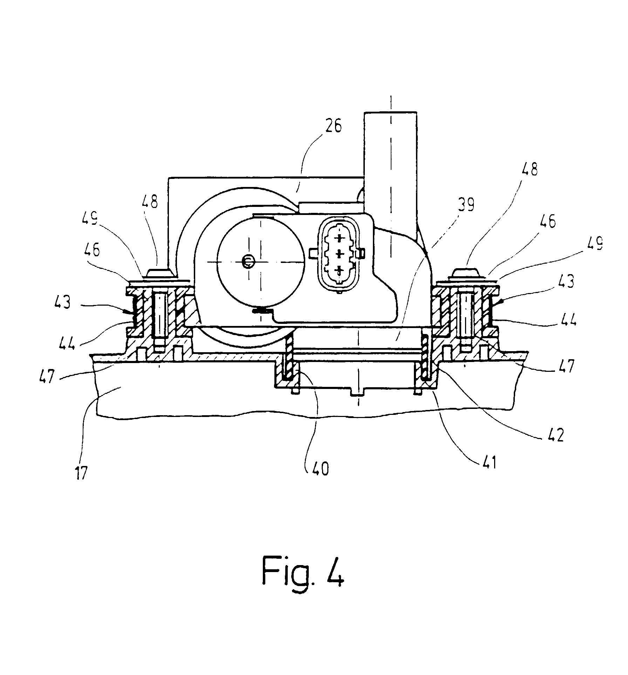

Die Befestigung des Pumpengehäuses 26 am Filtergehäuse 17 erfolgt akustisch und machanisch entkoppelt durch Gummielemente 43, wie sie in Fig. 2 in perspektivischer Ansicht und in Fig. 4 in Schnittdarstellung zu sehen sind. Jedes Gummielement 43 ist als garnrollenartige Hülse 44 mit einem doppel-T-förmigem Längsschnitt ausgebildet, die mit ihrem Mittelteil in am Pumpengehäuse 26 angeformten, gabelartigen Halterungen 45 formschlüssig aufgenommen sind. Die Höhe jeder Halterung 45 entspricht der Länge des Mittelteils der Doppel-T-förmigen Hülse 44, so daß diese axial unverschieblich zwischen ihren beiden Flanschen in der Halterung 45 eingespannt ist. Auf dem Filtergehäuse 17 stehen rechtwinklig von dessen Oberfläche Aufnahmezapfen 46 für die Hülsen 44 ab, in die jeweils eine Gewindebohrung 47 eingedreht ist. Die Hülsen 44 sind auf die Aufnahmezapfen 46 aufgeschoben und mittels Kopf schrauben 48, die in die Gewindebohrungen 47 eingeschraubt werden unter Zwischenlage einer Unterlegscheibe 49 am Filtergehäuse 17 festgespannt. Die Hülsen 44 stehen dabei geringfügig über das freie Ende der Aufnahmezapfen 46 vor.

Wie in der Zeichnung nicht weiter dargestellt ist, kann zur Filterung der über den Pumpeneingang 29 angesaugten Luft im Filtergehäuse 17 noch ein Staubfilter vorgesehen werden, das dann dem Adsorptionsfilter 18 in Luftströmungsrichtung vorgeordnet ist.

Die Wirkungsweise der Tankentlüftungseinrichtung im Filterbetrieb und zur Fehlerdiagnose ist bekannt und beispielsweise in der DE 195 23 935 A1 beschrieben, so daß hierauf nicht näher eingegangen zu werden braucht.

## Patentansprüche

1. Tankentlüftungseinrichtung für Kraftfahrzeuge mit aus einem Kraftstofftank (10) gespeistem Verbrennungsmotor, mit einem an einem Entlüftungsstutzen (13) des Kraftstofftanks (10) anschließbaren, einen Adsorptionsfilter (18), insbesondere Aktivkohlefilter, enthaltenden Filtergehäuse (17), das einen Lufteinlaß (19) und einen Luftauslaß (20) aufweist, und mit einer Luftpumpvorrichtung (27) zur Fehlerdiagnose, die ein Pumpengehäuse (26) mit einem Pumpeneingang (29) und einem mit dem Lufteinlaß (19) des Filtergehäuses (17) verbundenen Pumpenausgang (28) aufweist, dadurch gekennzeichnet, daß das Pumpengehäuse (26) mit dem Pumpenausgang (28) an das Filtergehäuse (17) angesetzt und mittels federelastischer Befestigungselemente (43) an dem Filtergehäuse (17) befestigt ist und daß der Übergang zwischen Pumpenausgang (28) und Lufteinlaß (19) luftdicht abgedichtet ist.

2. Einrichtung nach Anspruch 1, dadurch gekennzeichnet, daß der Lufteinlaß (19) koaxial zum Pumpenausgang (28) ausgerichtet ist.

3. Einrichtung nach Anspruch 1 oder 2, dadurch gekennzeichnet, daß die federelastischen Befestigungselemente Gummielemente (43) sind.

4. Einrichtung nach Anspruch 3, dadurch gekennzeichnet, daß die Gummielemente (43) als garnrollenartige, im Längsschnitt doppel-T-förmige Hülsen (44) ausgebildet sind, die jeweils mit ihrem Mittelteil in am Pumpengehäuse (26) angeformten gabelartigen Halterungen (45) formschlüssig aufgenommen und mittels hindurchgeführter Kopfschrauben (48) auf dem Filtergehäuse (17) festgespannt sind.

5. Einrichtung nach einem der Ansprüche 1- 4, dadurch gekennzeichnet, daß der Pumpenausgang (28) als ein vom Pumpengehäuse (26) abstehender Auslaßstutzen (39) und der Lufteinlaß (19) als eine im Filtergehäuse (17) ausgesparte Gehäuseöffnung (40) ausgeführt sind und daß zur Abdichtung des Übergangs zwischen Pumpenausgang (28) und Lufteinlaß (19) eine elastische Dichtungshülse (42) auf den Auslaßstutzen (39) aufgeschoben ist, die mit ihrem vom Auslaßstutzen (39) abgekehrten Stirnende in einer die Gehäuseöffnung (40) konzentrisch umgebenden Ringnut (41) im Filtergehäuse (17) einliegt.

6. Einrichtung nach einem der Ansprüche 1 - 5, dadurch gekennzeichnet, daß im Filtergehäuse (17) ein Staubfilter angeordnet ist, das dem Adsorptionsfilter (18) in Luftströmungsrichtung vom Lufteinlaß (19) zum Luftauslaß (20) vorgeordnet ist.

## Claims

1. Tank venting device for motor vehicles with internal combustion engine fed from a fuel tank (10), having a filter housing (17) which can be connected to a vent connection (13) of the fuel tank (10), which contains an adsorption filter (18), in particular an active carbon filter, and which has an air inlet (19) and an air outlet (20), and having an air pump appliance (27) for fault diagnosis, which air pump appliance (27) has a pump housing (26) with a pump inlet (29) and a pump outlet (28), which is connected to the air inlet (19) of the filter housing (17), characterized in that the pump outlet (28) of the pump housing (26) is placed on the filter housing (17) and is fastened onto the filter housing (17) by means of resiliently elastic fastening elements (46) and in that the transition between the pump outlet (28) and the air inlet (19) is sealed in an air-tight manner.

2. Device according to Claim 1, characterized in that the air inlet (19) is aligned coaxially with the pump outlet (28).

3. Device according to Claim 1 or 2, characterized in that the resiliently elastic fastening elements are rubber elements (43).

4. Device according to Claim 3, characterized in that the rubber elements (43) are configured as bobbin-type sleeves (44) of double T shape in longitudinal section, the central part of each sleeve (44) being accepted as a form fit in fork-type retention features (45) formed on the pump housing (26) and being clamped on the filter housing (17) by means of cap screws (48) fed through them.

5. Device according to one of Claims 1 to 4, characterized in that the pump outlet (28) is configured as an outlet connection (39) protruding from the pump housing (26) and the air inlet (19) is configured as a housing opening (40) recessed in the filter housing (17) and in that an elastic sealing sleeve (42) is pushed onto the outlet connection (39) to seal the transition between pump outlet (28) and air inlet (19), the front end of which sealing sleeve (42) facing away from the outlet connection (39) lying in an annular groove (41), in the filter housing (17), concentrically surrounding the housing opening (40).

6. Device according to one of Claims 1 to 5, characterized in that a dust filter, which is placed upstream of the adsorption filter (18) in the airflow direction from the air inlet (19) to the air outlet (20), is arranged in the filter housing (17).

## Revendications

1. Installation de dégazage de réservoir de véhicule automobile équipé d'un moteur à combustion interne alimenté à partir d'un réservoir de carburant (10), comprenant :
- un boîtier de filtre (17) contenant un filtre adsorbant (18), notamment un filtre à charbon actif, raccordé au réservoir (10) dans l'un des ajutages de dégazage (13),
- ce boîtier de filtre ayant une entrée d'air (19) et une sortie d'air (20),
- un dispositif de pompage d'air (27) pour le diagnostic d'un défaut qui présente un boîtier de pompe (26) avec une entrée de pompe (29) et une sortie de pompe (28) reliée à l'entrée d'air (19) du boîtier de filtre (17),
caractérisée en ce que
- le boîtier de pompe (26) est installé avec la sortie de pompe (28) sur le boîtier de filtre (17), et est fixé par des éléments de fixation (43) ayant l'élasticité d'un ressort, sur le boîtier de filtre (17), et
- le passage entre la sortie de pompe (28) et l'entrée de pompe (19) est rendu étanche à l'air.

2. Installation selon la revendication 1,
caractérisée en ce que
l'entrée d'air (19) est alignée coaxialement sur la sortie de pompe (28).

3. Installation selon la revendication 1 ou 2,
caractérisée en ce que
les éléments de fixation élastiques à ressort sont des éléments en caoutchouc (43).

4. Installation selon la revendication 3,
caractérisée en ce que
les éléments en caoutchouc (43) sont réalisés sous la forme de manchons (44) assimilables à des bobines de fil en forme de double T en coupe longitudinale, ces éléments étant reçus par leurs parties médianes dans des supports de fixation (45) réalisés en forme de fourches sur le boîtier de pompe (26), et ils sont serrés à l'aide de vis à tête (48), traversantes, sur le boîtier de filtre (17).

5. Installation selon l'une des revendications 1 à 4,
caractérisée en ce que
- la sortie de pompe (28) est un embout de sortie (39) en saillie par rapport au boîtier de pompe (26), et l'entrée d'air (19) est une ouverture de sortie (40) réalisée dans le boîtier de filtre (17) et,
- pour assurer l'étanchéité de la jonction entre la sortie de pompe (28) et l'entrée d'air (19), il est prévu un manchon d'étanchéité (42), élastique, sur l'embout de sortie (39), ce manchon venant par sa face frontale non tournée vers l'embout de sortie (39), dans une rainure annulaire (41) du boîtier de filtre (17) entourant de manière concentrique l'orifice (40) du boîtier.

6. Installation selon l'une des revendications 1 à 5,
caractérisée par
un filtre à poussière placé dans le boîtier de filtre (17), ce filtre précédant le filtre par adsorption (18) dans la circulation d'air entre l'entrée d'air (19) et la sortie d'air (20).
